Europäisches Patentamt

European Patent Office (11) Publication number: **0 071 443**

Office européen des brevets **B1**

(12) **EUROPEAN PATENT SPECIFICATION**

(45) Date of publication of patent specification: **29.10.86**  (51) Int. Cl.⁴: **C 02 F 1/46**

(21) Application number: **82303926.8**

(22) Date of filing: **23.07.82**

(54) Device for waste water treatment.

(30) Priority: **24.07.81 US 286551**

(43) Date of publication of application:
**09.02.83 Bulletin 83/06**

(45) Publication of the grant of the patent:
**29.10.86 Bulletin 86/44**

(84) Designated Contracting States:
**AT BE CH DE FR GB IT LI LU NL SE**

(56) References cited:
**EP-A-0 010 562**
**EP-A-0 031 267**
**US-A-3 896 013**

**Journal of Applied Electrochemistry, 8 (1978) pages 195-205.**

(73) Proprietor: **ELTECH SYSTEMS CORPORATION Town Executive Center 6100 Glades Road Suite 305**
**Boca Raton Florida 33434 (US)**

(72) Inventor: **Branchick, Kenneth J.**
**108 Doncaster Court**
**Mentor, OH 44060 (US)**
Inventor: **Malkin, Irving**
**4161 Silsby**
**University Heights, OH 44118 (US)**
Inventor: **Sutter, Robert C.**
**95 Fairfield Road**
**Painesville, OH 44077 (US)**
Inventor: **Korinek, Karel A.**
**7677 Chillicothe**
**Mentor, OH 44060 (US)**
Inventor: **Suchanski, Mary R.**
**18 E. Spanish Trail**
**Rochester, NY 14620 (US)**
Inventor: **Knaack, Donald M.**
**6281 Kenyon Court**
**Mentor, OH 44060 (US)**
Inventor: **Platek, Gary F.**
**2955 Hemlock Drive**
**Willoughby Hills, OH 44094 (US)**

(74) Representative: **Cronin, Brian Harold John et al**
**c/o DST SA 3, Route de Troinex**
**CH-1227 Carouge/GE (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention is directed to an apparatus comprising an electrolytic cell, for treating waste waters, particularly those resulting from metal plating operations and known as platers' rinse waters, to remove metal pollutants (and optionally also cyanide) from such waste waters, prior to discharge of the treated effluent into streams, rivers and other waterways.

There is considerable and growing concern over pollution of waterways with various contaminants, such as the heavy metals, e.g., copper, nickel, zinc, mercury and cadmium, and nonmetallic contaminants such as cyanide, as well as complexes of the foregoing metals with cyanide, etc. Many of these pollutants enter waterways from industrial sources, such as metal-finishing or plating plants, and from mining sources. Environmental legislation and regulations, on all government levels, set maximum allowable concentrations of these contaminants which may be discharged into public waterways.

A clear need exists for an economical yet effective device for treating waste waters to permit removal of a substantial proportion of contaminants, especially plating plant rinse waters, which customarily contain one or more of such metals as copper, zinc and cadmium, alone or in combination with cyanide.

Various methods have been proposed or are reported to be available for use in the removal of metals and/or cyanide from water. One device for removing heavy metals from waste water is disclosed in US—A—3,954,594 and comprises an electrochemical cell provided with separate anode and cathode compartments, each containing a bed of electrically-conductive particles. The compartments are separated by an electrically-nonconductive foraminous member, e.g., a water-impermeable plastics material, such as Nylon, cellophane or a ceramic material, such as the oxides of silicon, zirconium, tantalum, beryllium and mixtures thereof. Suitable electrically-conductive particles for use in the anode compartment include graphite, tantalum, stainless steels and the metals of Group VIII of the Periodic Table of the Elements. Suitable materials for the particles for use in the cathode compartment include copper, nickel, tin, zinc, silver and gold. This apparatus is stated to be capable of removing heavy metals and cyanide pollutants from aqueous streams containing them.

US—A—4,197,181 describes a dual stationary particulate bed electrode for electrowinning metal values from solutions containing them. Each of the two electrode assemblies comprises an electrically-nonconductive support frame holding a flat perforated electrically-conductive distributor plate through which the solution to be treated flows. Attached to the side of the distributor plate and facing the inner cavity defining the stationary particulate bed is a coarse filter strainer. Each particulate bed can comprise conductive carbonaceous particles, on which the desired metal values deposit. An interface liner, e.g., a synthetic filter cloth, is disposed on one side of the distributor plate and a polyurethane foam filter element on the opposite side. The interface liner discourages bonding of the particulate bed particles to the liner through the action of dendrites growing through the liner. The filter element improves flow distribution and eliminates any particulate material from the electrolyte solution before it passes through the perforated plate.

US—A—4,226,685 (derived from US—A—4,197,181) describes a method of treating plating wastes containing at least one heavy metal and (optionally) cyanide ions so that ionic contaminants are reduced to acceptably low concentrations and the plated metals are available in a concentrated and thus retrievable form. This method appears to utilize the apparatus disclosed in US—A—4,197,181, namely a stationary dual particulate bed apparatus utilizing dual electrodes with a central cavity and including filters for trapping particulate matter suspended in the plating wastes. The sole example in US—A—4,226,685 describes an inlet stream containing 150 parts per million of copper as cupric sulphate and 76 litres (20 US gallons) of such solution was processed in 6 hours in 2 passes through the apparatus, each pass lasting 3 hours. The effluent copper concentration, as a result of the first pass, was 33 parts per million and, as a result of the second pass, 15 parts per million.

US—A—3,694,325 describes a process for producing a 3-dimensional reticulated electroform by first electrolessly and then electrolytically depositing metal on a flexible tester-type polyurethane foam, followed by heating the metallized foam to 425°C (about 800°F) in an oxidizing environment, i.e., air, to decompose the polyurethane substrate and so pyrolyze it from the electroform. Then a second heat treatment in a reducing atmosphere, at higher temperature, can be employed to anneal the pyrolyzed electroform. Although it is stated that the substrate may or may not be removed after plating, the remainder of this specification, including all the detailed disclosure and the sole example requires this pyrolysis of the polyurethane foam substrate.

The Proceedings of the 11th International Symposium, held at Brighton in September, 1978, contain at pages 219 to 237 an article entitled "IMPROVEMENT OF THE HIGH-RATE DISCHARGE BEHAVIOUR OF THE NICKEL ELECTRODE" by Guy Crespy et al published in "POWER SOURCES 7 (RESEARCH AND DEVELOPMENT IN NON-MECHANICAL ELECTRICAL POWER SOURCES)" by Academic Press, directed to the use of a nickel foam-type electrode structure in alkaline batteries. This structure is obtained by impregnating with a nickel powder ether-type organic polymer foams, such as polyurethane foams, having most of their pores inter-communicating, followed by heating the powder-impregnated polyurethane foam at temperatures sufficiently high to effect the pyrolization of the polyurethane substrate. The pyrolysis is carried out by placing the powder-impregnated foam in an oven under a very light pressure (approximately 2 grams/cm$^2$) while slowly raising the temperature under a reducing atmosphere until the organic material

**0 071 443**

decomposes into volatile substances (up to 450°C) and is quantitatively eliminated. The resulting powder is then sintered at a temperature of about 700° to 1000°C. Typical sintering conditions employed were 1000°C for one hour. The resulting electrode substrates were then impregnated with active material by a one-step cathodic precipitation of nickel hydroxides. The resulting electrodes are utilized in so-called dry cell or storage batteries of the alkaline type.

The *JOURNAL OF APPLIED ELECTROCHEMISTRY 8* (1978), pages 195 to 205 comprises an article entitled "CHARACTERIZATION OF RETICULATE THREE-DIMENSIONAL ELECTRODE" by A. Tentorio et al, which describes the preparation of a reticulated electrode by first electrolessly and then electrolytically depositing copper on a polyurethane foam substrate. This electrode is then installed in an electrolytic cell, one type having a counter-electrode of copper and another of lead/lead dioxide with an ion exchange membrane, which serves to separate the anolyte and catholyte feeds. It is stated that the latter cell could only be used for waste water treatment with multiple-pass electrolysis and that the concentration of pollutants after treatment should not be below tens of parts per million, in order not to weigh down excessively the recycle.

EP—A—0 010 562 discloses a process for electrochemical oxidation or reduction of species present in an electrolyte solution wherein the electrolyte is circulated through an individual cell. The undivided cell disclosed comprises a plurality of anodes and a plurality of cathodes mounted in a mutually-spaced arrangement in a nonconductive cell box. The box has a waste water inlet and a water outlet for passing waste water through the electrodes. The anodes and the cathodes are connected to respective bus bars for connection to a source of electrical energy. The electrodes disclosed may be in the form of plates, tubes fibers or lamellar in structure. The preferred embodiment describes use of electrodes in the form of slurry.

EP—A—0 031 267 discloses a porous carbon or graphite felt electrode whose surface is impregnated with a surface active agent and a process of treating of waste water using the electrode. The application deals almost exclusively with impregnation of the surface of carbon or graphite porous felt.

According to the present invention, an apparatus for reducing the amount of one or more metal contaminants in waste water by subjecting it to electrolytic action comprising a membrane-free and diaphragm-free electrolytic cell having a plurality of anodes and a plurality of cathodes mounted in a mutually-spaced arrangement in a nonconductive cell box, the box having a waste water inlet and a water outlet for passing waste water through the electrodes, the anodes and the cathodes being connected to respective anode and cathode bus bars for connection to a source of electrical energy, is characterized in that the nonconductive cell box comprises an upper peripheral flange, the anodes and cathodes being movable on the flange and each having a terminal connector to the respective bus bar located on the cell box below the flange, each anode having openings through which the waste water can flow and each cathode comprising a reticulated structure having a metallised open-cell organic polymer foam as a substrate.

Preferably, at least one of the reticulated cathodes comprises an open-cell organic polymer foam substrate having an electroless and then an electrolytic deposit of metal or alloy on and within the pores of the foam.

The electrolytic waste water treatment device of this invention enables the removal of metal from plating plant rinse water with or without recycling. It offers a more direct treatment procedure, as it does not require the use of an ion exchange membrane to separate the anolyte and catholyte. Additionally, in the cell of the invention, the solution to be treated flows through one compartment in the cell. The cell system is flexibly designed to accommodate any type of anode, e.g., graphite, DSA, lead, aluminium, etc. and reticulated cathodes.

The device is of simple construction and is therefore inexpensive. The cell provides ready access to the cathodes, so that they can be quickly and easily removed. The device allows for the introduction of fresh cathodes at the rear of the electrode pack, while moving forward those electrodes which were previously to the rear of the pack so that they may be fully plated. This allows for more efficient use of the cathodes, thus reducing the cost of operation. Additionally, the metal-plated cathode structures can be recovered and sold for scrap. This scrap metal from the loaded cathode structure is routinely in a +99 percent pure form, with treatments in which there is only one metal contaminant in the effluent stream. Metal contaminants such as copper, cadmium, nickel, zinc, silver and gold can be removed routinely, from inlet solutions containing approximately 150 ppm, to produce an outlet solution containing approximately 15 ppm in the single-pass mode, the cell having 50 copper reticulated cathodes and 51 anodes of the graphite or DSA type are employed. In a recycling system, cyanide can be oxidized to cyanate while metal removal is occurring at the copper reticulated cathode. The cyanide can be oxidized routinely so that an inlet solution containing approximately 150 ppm produces an outlet solution containing approximately 10 ppm of cyanide and approximately 220 ppm of cyanate. This concurrent system is utilized at highly alkaline pH values above about 11, e.g. from about $11^+$ to about 13.

The invention will be understood further in conjunction with the accompanying drawings, in which:

Figure 1 shows a perspective view of an apparatus of the invention, with parts of the cell shown in elevation;

Figure 2 is a plot of metal concentration versus number of reticulated cathodes, obtained in the treatment of acid copper and cyanide zinc rinse waters in the apparatus;

3

Figure 3 is a plot of metal and cyanide concentrations versus treatment time, obtained in cadmium cyanide treatment;

Figure 4 is a plot of metal concentration versus treatment time for a Watts nickel rinse water treatment;

Figure 5 is a plot of copper concentration versus treatment time, obtained in the treatment of an ammoniacal copper etchant rinse water;

Figure 6 is a plot of copper concentration versus treatment time, obtained in the treatment of a copper electroless rinse water;

Figure 7 shows a perspective view of a form of grooved or slotted cell box insert;

Figure 8 shows a perspective view of a detial of a cell box moulded to have grooved or slotted walls;

Figures 9a, 9b and 9c show detailed views of the apparatus in cross-sectional view, to illustrate features of construction of the cathodes;

Figure 10 shows a top plan view or a side or sectional view of the electrode arrangement in the cell;

Figure 11 shows a fragment of an anode in perspective view;

Figure 12 shows a further detail of cell structure, in fragmentary elevational view;

Figure 13 shows a view of the cell of Figure 12 taken on the line 13—13 in Figure 12;

Figure 14 shows a further detail of construction of the cell, again in fragmentary elevational view.

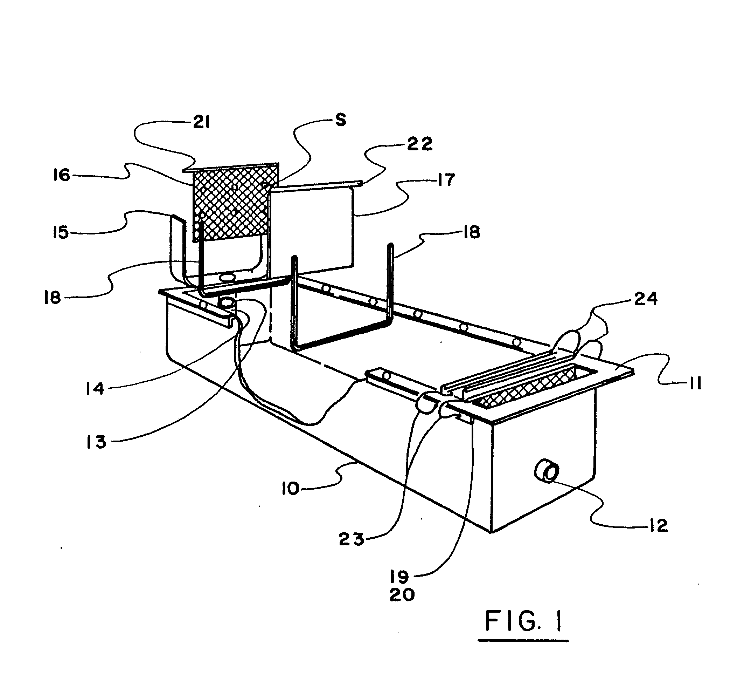

As shown in Figure 1, a cell box 10, which can be made of "ROTOMOULDED" cross-linked polyethylene, polypropylene or other equivalent plastics material, has an upper flange 11 therearound. An inlet nozzle 12 and an outlet nozzle 13, of plastics material, e.g. polyvinyl chloride, the latter surmounting a standpipe 14, permit the waste water to be treated to pass into an out of the cell 10. Endspacers 15 of polyvinyl chloride or equivalent nonconductive material are provided at either end of the cell box 10. As shown, the endspacer 15 at one end of the cell box 10 fits over the standpipe 14. Anodes 16, which may be of the dimensionally-stable type, are separated from reticulated metallized open-cell organic polymer foam cathodes 17 at their outer peripheries by nonconductive intermediate spacers 18, which may be made from polyvinyl chloride or equivalent plastics material. Plastics material isolator snaps S, e.g. of nylon, (known in the art) can be used to aid in separating the main body portions of the anodes 16 from the cathodes 17. An anode busbar 19 is positioned on one side on the undersurface of the cell box flange 11 and correspondingly a cathode busbar 20 is positioned similarly on another side, e.g., the opposite side, again on the undersurface of the flange 11. Anode contact bars 21 with extensions are positioned on the upper portions of the anodes 16, to effect contact with the anode busbar 19 and, correspondingly, cathode contact bars 22 with extensions are positioned on the upper portions of the cathodes 17, to make electrical connection with the cathode busbar 20. When metallized open-cell organic polymer foam reticulated cathodes are employed, generally U-shaped sheet metal, e.g., galvanized sheet, cathode contact bars 22 are secured to the upper portions of the reticulated cathodes 17 by slipping them over the cathodes 17 and pinching or pressing the sheets at selected portions of or across their entire length, so as to fasten securely the upper portions of the reticulated cathodes 17. Respective anode terminal connectors 23 and cathode terminal connectors 24 join the anode contact bars 21 to the anode busbar 19 and the cathode contact bars 22 to the cathode busbar 20. A cell cover plate (not shown) can be utilized to close the electrolytic cell 10. Such a cell cover plate is not required, however. The apparatus of this invention can be used to carry out the metal and/ or concurrent metal removal-cyanide destruction processes described and claimed in copending US—A—4,436,601 (EP—A—74167) or even date, entitled "Metal Removal Process".

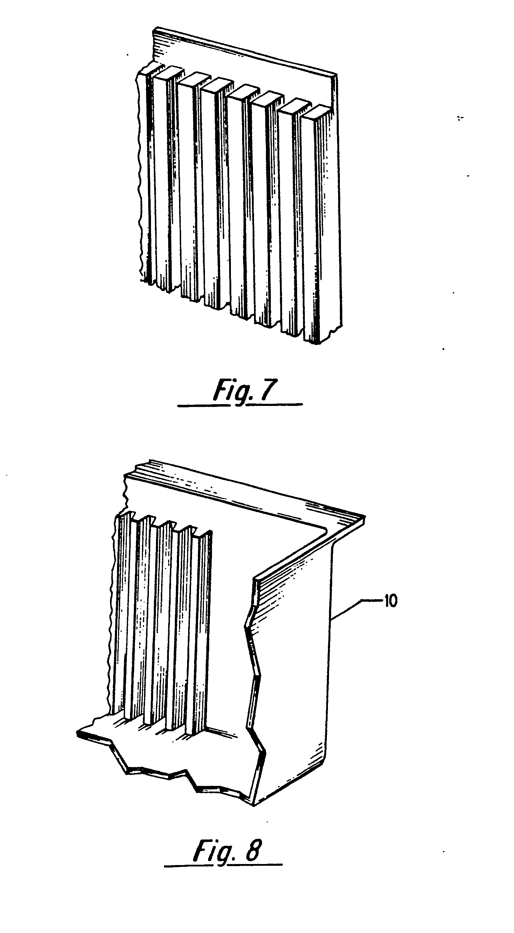

Grooved or slotted side and/or bottom inserts can be located in the cell box 10 to receive the electrodes 16 and 17 and allow for their ready insertion and removal. Alternatively, the cell box 10 can be moulded so as to have grooved or slotted formations at the sides and/or the bottom, for the same purpose. In either case, the endspacers 15 and the intermediate spacers 18 can then be dispensed with. Figure 7 shows typical grooved or slotted inserts and Figure 8 shows the cell box 10 with the appropriate grooves or slots moulded into it.

If the cell box 10 is provided with a cover plate, it is preferably flat or substantially concave (when viewed from above) or of equivalent configuration, so as to permit upward flow of any gases accumulating within the cell. Such a cover plate assists in preventing the accumulation of gases, e.g., hydrogen, chlorine, oxygen, etc., which may be harzardous, nauseous or explosive, either singularly or in combination.

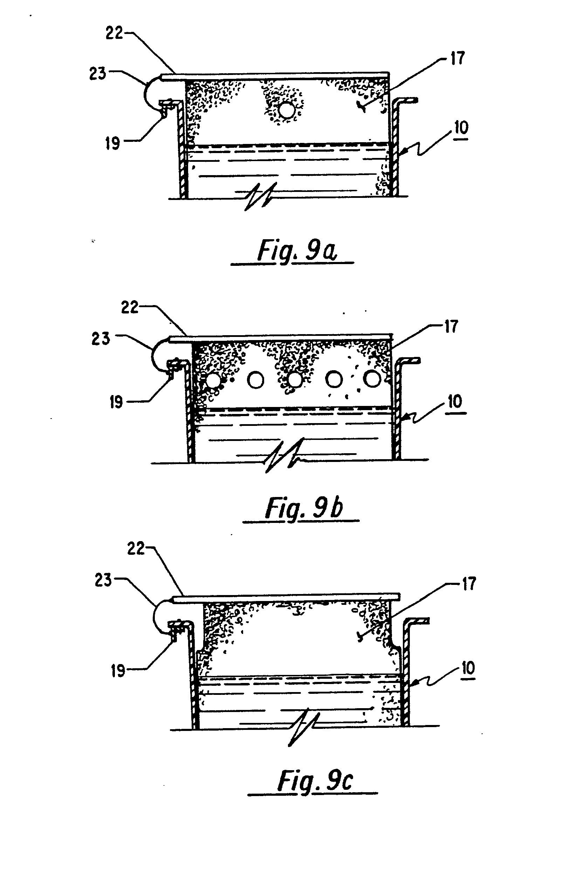

One or more notches, preferably in one or both of the upper corners, or one or more holes can be provided in one or more or all of the cathodes 17, the or each notch or hole being located above the normal liquid level in the cell. These notches or holes serve to prevent cell overflow in the event of cathode blockage. If one or more holes are provided for this purpose, instead of one or more notches, they are larger in size than the pores of the reticulated electrodes and are usually much larger in size. Figure 9a shows a cathode 17 with one centrally-placed hole, Figure 9b shows a cathode 17 with a row of 5 equispaced holes and Figure 9c shows a cathode 17 with a notch at each upper corner, to illustrate various forms of this feature of the apparatus. Such notches or holes can also be provided in anodes made of metallized open-cell foam plastics material, for the same purpose.

The apparatus of the invention can also include alternating reticulated cathodes and solid anodes, the latter either extending over less than the total cross-sectional area of the cell box 10, so as to create an area deficiency, or containing one or more holes, for the same purpose. The anode area deficiency can be located either at a side (lateral area deficiency) or at the top and/or bottom (horizontal area deficiency) of each solid anode. The anode area deficiency is arranged to alternate, e.g., left, right, left, right (when lateral)

4

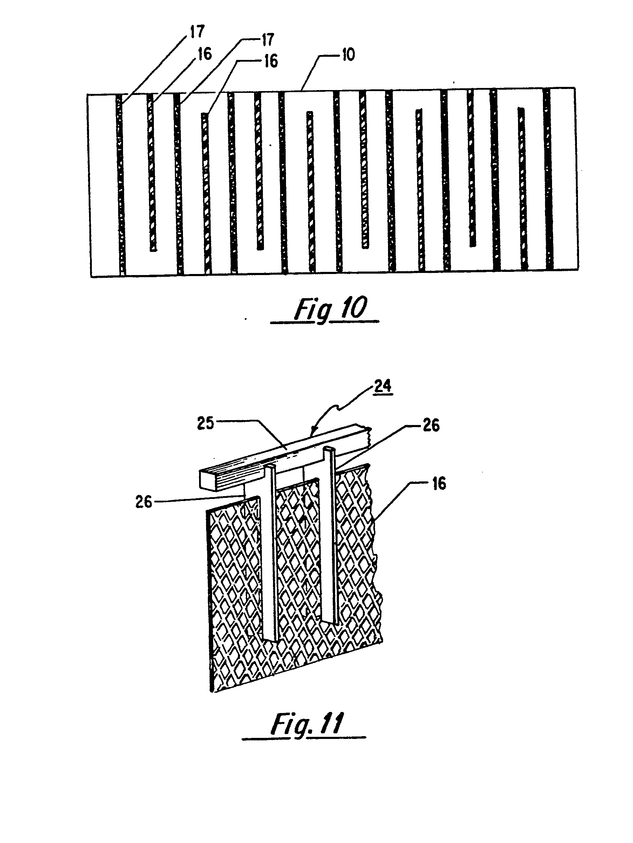

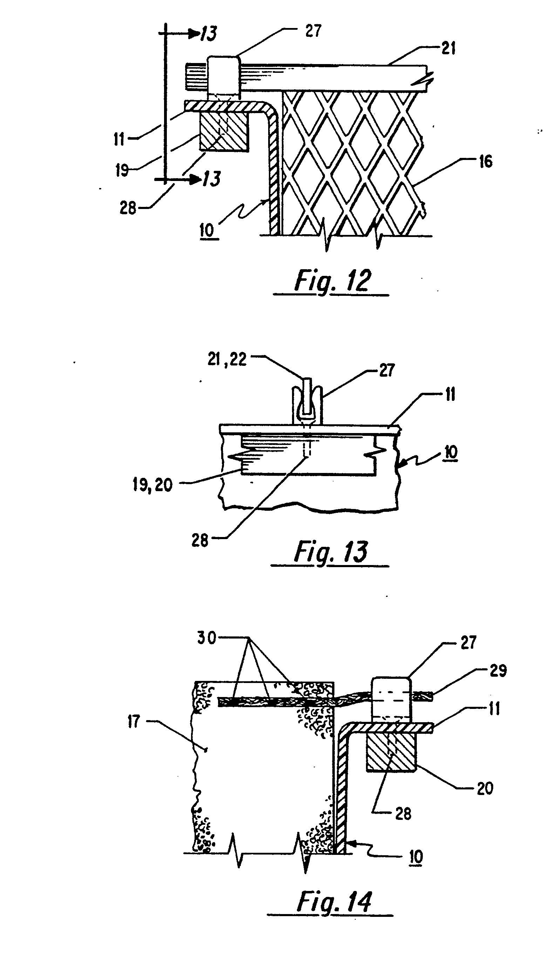

or top, bottom, top, bottom (when horizontal). Figure 10 shows both a lateral area deficiency (when viewed as a top plan view) and a horizontal area deficiency (when viewed as a side or sectional view). Figure 11 shows the use of alternating holes to create areas of solid anode deficiency. Both of these structural features enable the electrolyte to follow a sinuous path around the solid anodes 16 and through the reticulated cathodes 17.

The apparatus of the invention can likewise feature lateral or horizontal area deficiencies or holes in the reticulated cathodes, to prevent the overflow of electrolyte in the cell box 10, when some or all of the cathodes 17 become plugged.

One or more porous filters, e.g. of organic, ceramic or other material (not shown), can be provided, preferably within the cell box 10, at the inlet thereof, in order to remove suspended particulate or flocculent matter from the liquid entering the cell 10. One or more of these filters can be grooved to allow for liquid by-pass in the event of plugging of one or more of the reticulated cathodes 17. These filters can be readily removed and replaced without interrupting cell operation.

In addition to polyurethane foams, other organic polymer foams can be employed as substrates for the reticulated cathodes preferably used in the apparatus of this invention. Such organic polymer foams as polyolefins, e.g., polyethylene or polypropylene, and also polyvinyl chloride, can be used. These organic polymer foam substrates can be metallized by using metallization techniques known in the art. The metallized organic polymer foam substrates can be used as such or can have metal coatings electrolytically deposited on them, in a manner similar to that indicated above for the electrolessly-metallized polyurethane foam substrates.

In order to prevent localized short circuits due to electroconductive debris, e.g., metallic material, present in the bottom portions of the cell box 10, the anodes 16 can be raised from the bottom of the cell box 10, using plastics material strips which can be included as inserts in the bottom of the cell box 10 or can be moulded integrally therein in the form of ledges. These strips or ledges (not shown) serve to elevate the anodes and obviate localized shorting.

In the apparatus of the invention, one or more air spargers can be provided, in order to enhance liquid movement and render more even the contact between the waste water to be treated and the electrodes 16, 17 contained within the cell box 10. Thus, a plurality of horizontally-disposed air sparger pipes having openings spaced along them (not shown) can be used for this purpose. It has been found that the provision of these spargers gives enhanced metal removal, when utilizing the device of this invention.

In accordance with a preferred feature of the apparatus of this invention, as shown in Figure 11, nonconductive separators which span the width of the cell box 10 can be employed to maintain the required spacing or separation between the anodes 16 and the cathodes 17. As shown in Figure 11, a separator 24 includes an upper member 25 which spans the width of the cell box and a plurality of dependent fork-shaped members 26, which are disposed over the top part of one of the anodes 16. Both the upper member 25 and the fork-shaped members 26 can be made of nonconductive material, e.g. plastics material, such as polyvinyl chloride, polyethylene, polypropylene, Nylon, polytetrafluoroethylene, etc. By positioning the bar-shaped members 25 correctly on the top of the cell box 10, the anodes 16 carried beneath them can be appropriately spaced and thus separated from one another and from the intermediate cathodes 17, in the kind of arrangement shown in Figure 10.

The anode busbar 19 (and the corresponding cathode busbar 20) are shown in Figure 1 as having a 90° angled or L-shaped configuration, but the apparatus of the invention can also employ busbars of other geometrical configurations, e.g., rectangular. Thus, busbars which are rectangular in shape and solid or hollow in cross-section can be utilized.

The apparatus of the invention can also include an overflow weir, to serve as an indicator for measurement of the flow rate at the outlet side of the cell box 10. For example, a notch can be cut in the outlet pipe, viz, the standpipe 14, to serve as a visual indicator giving a rough estimate of the flow rate within the cell box 10. Alternatively, the standpipe 14 can be replaced by a sheet which extends to the bottom and both sides of the box 10 and serves as an overflow weir for the same purpose.

It has been found that a very wide mesh type of expanded metal anode can be used in the cell of this invention. Thus, substantial economies in metal and in metal-coating costs can be made by using expanded metal mesh anodes having a length dimension of up to 75 mm (about 3 inches) and a width dimension of up to 38 mm (about 1½ inch), compared to conventional expanded metal anodes currently used in electrolytic cells, which have approximately a 12 mm (½ inch) length dimension and a comparable 6 mm (¼ inch) width dimension.

In place of the electrode terminal connectors 23 shown in Figure 1, for connecting the upper portions of the anodes 16 and cathodes 17 to their respective busbars, a fuse clip connection member 27 can be employed. As shown in Figures 12 and 13, the fuse clip 27 can be bolted or otherwise secured through a hole in the flange 11 of the cell box 10 and joined to the appropriate anode busbar 19 or cathode busbar 20 by a bolt 28. When such an arrangement is employed, the upper connector portion comprising the anode or cathode contact bar 21 or 22, respectively, merely slips into contact in the open portion of the spring-like fuse clip 27, as best shown in Figure 13. Such a construction permits the ready insertion and removal of electrodes.

Likewise in accordance with this invention, the anodes 16 and the reticulated cathodes 17 can be connected to the fuse clips 27 of the type shown in Figures 12 and 13, by braided conductive metal strips 29,

5

which are soldered to the electrodes at soldering points 30, as shown for the cathode 17 in Figure 14. The free end of the metal braid or strip 29 is then inserted into and secured in the open portion of the fuse clip 27. Other equivalent means, such as alligator clips in combination with wires of the type shown by the connectors 23 in Figure 1, can be utilized for the same purpose, so as to connect the appropriate electrode to its busbar.

In the foregoing description, the cathodes 17 are described as reticulated metallized open-cell organic polymer foam structures. In accordance with a particular preferred feature of the device of this invention, the anodes 16 can similarly be metallized open-cell organic polymer foam reticulated electrode structures. On the other hand, one or more or all of the anodes 16 can be solid structures, e.g. by being made of graphite or lead and having openings or perforations to allow waste water to flow through. One or more or all of the anodes 16 can instead be of the dimensionally-stable type, e.g. expanded metal mesh, which can be a titanium or other valve metal substrate, with a precious metal and/or metal oxide coating, e.g. of tantalum, iridium, rhodium, ruthenium, platinum, etc., with or without one or more nonprecious metal oxides, e.g., manganese dioxide and/or lead dioxide.

The organic polymeric foam substrate which is used should mostly have interconnected pores, viz., it should be of the open-cell type. Suitable substrate materials include, but are not limited to, polyurethane foam, such as the open-cell polyurethane foams known as Scott Industrial Foam, Q version; Scott Industrial Foam, PVC coated; Scottfelt foam; reticulated carbon; polyether urethane foam and polyester urethane foam.

The foam substrate material can have pore sizes ranging from about 0.25 to 2.5 mm (10 to 100 mils or 0.010 or 0.100 inch). Usually, however, the average pore size of the foam substrate ranges from about 0.5 to 1.0 mm (20 to 40 mils or 0.020 to 0.040 inch). The term "pore size" refers to the average diameter of the foam pores prior to the first, viz., electroless, metal deposition procedure. Such foam substrates characteristically contain about 8 to 18[+] or more pores per cm (about 20 to 45[+] pore per inch (ppi)).

A variety of metals can be used to metallize the open-cell organic polymeric foam substrates. Thus, such metals as i.a. copper, nickel, palladium, platinum, silver, gold, iron, zinc and cobalt and their alloys can be deposited first electrolessly and then electrolytically. By way of example, nickel-metallized and copper-metallized electrodes can be made as indicated below. It should be noted, however, that the cell of this invention is particularly well suited for use with a wide variety of reticulated electrodes and can utilize any reticulated cathodes, e.g., of carbon, metal mesh, etc., alone or in conjunction with reticulated electrodes of metallized or organic polymer foam. "Reticulated" in this context includes any mesh-like, porous or like structure which allows liquid to pass through.

1) Nickel Reticulated Electrode Fabrication

The organic polymer foam substrate, e.g., polyurethane, such as Scott Industrial Foam (Q version), has a layer of nickel deposited electrolessly upon it, by immersion in an electroless nickel plating bath for a period ranging from 2 to 60 minutes at a temperature ranging from 15° to 60°C. Usually, however, the electroless deposit of nickel is provided by immersing the foam substrate in the electroless plating bath for 5 to 10 minutes at a temperature for ambient room temperature, viz., about 20°C, to 50°C.

Prior to immersing the polyurethane foam in the electroless nickel plating bath, it is treated with a sensitizing material and then a catalyzing material to render it receptive to electroless nickel plating. Thus, the polyurethane substrate is immersed at room temperature in an aqueous sensitizing solution containing stannous chloride and hydrochloric acid, it is removed and thoroughly rinsed, then immersed in an aqueous catalyzing solution containing palladium chloride and hydrochloric acid and again removed and thoroughly rinsed, when it is ready for electroless nickel deposition. Characteristically, the polyurethane substrate is immersed first in the sensitizing bath and then in the catalyzing bath for 2 to 10 minutes each at ambient temperature. Typically, the sensitizing bath contains 5 to 15 grams per litre of anhydrous stannous chloride and 0.005 to 0.015 gram per litre of hydrochloric acid. The catalyzing bath contains 0.2 to 1.0 gram per litre of palladium chloride and 0.005 to 0.015 gram per litre of hydrochloric acid.

The prepared organic polymer foam substrate is then immersed in an electroless bath, usually at ambient to slightly elevated temperature, e.g., 20° to 60°C. The electroless plating bath is composed characteristically of two components, one containing nickel chloride, ammonium chloride, sodium citrate and ammonium hydroxide and the other comprising sodium hypophosphite and water. The electroless plating bath is suitably prepared by first adding the nickel chloride, as $NiCl_2 \cdot 6H_2O$, the ammonium chloride, the sodium citrate and the ammonium hydroxide to water and thoroughly agitating the mixture, to obtain dissolution of the components. Then the sodium hypophosphite is added to water and agitated to obtain dissolution. The two bath components are then added together to obtain the plating bath. Characteristically, this bath contains 40 to 50 grams per litre of the hydrated nickel chloride, 45 to 55 grams per litre of ammonium chloride, 95 to 105 grams per litre of the sodium citrate, 250 to 275 grams per litre of ammonium hydroxide and 10 to 20 grams per litre of sodium hypophosphite.

The foam substrate, electrolessly plated as indicated above, is then subjected to electrolytic plating using a conventional nickel electroplating bath. The constituents of this bath are nickel sulphate and boric acid. Anti-pitting agents can be used to control pitting of the deposit and agitation during deposition is recommended. Consumable nickel anodes are desirably used to maintain the bath composition. A typical composition and operating conditions and their range are as follows:

|  | Range | Nominal Value |
|---|---|---|
| Nickel sulphate (NiSO$_4$·6H$_2$O) (g/l) | 225—375 | 330 |
| Boric acid (H$_3$BO$_3$) (g/l) | 30—40 | 37 |
| Temperature: °C | 45—65 | 60 |
| pH | 4.0—6.0 | 4 |
| Current density: amps/m$^2$ | 269—1075 | 538 |
| amps/ft$^2$ | 25—100 | 50 |

2) Copper Reticulated Electrode Fabrication

The polyurethane foam substrate can be metallized with copper electrolessly and then electrolytically in a similar manner. The substrate first has a layer of copper deposited electrolessly upon it by immersion in an electroless copper plating bath for a period ranging from 2 to 25 minutes at ambient temperature. Typically, the electroless deposition of copper is effected by immersing the substrate in the electroless plating bath for 15 to 25 minutes at room temperature, viz., 15° to 30°C.

Prior to immersing the polyurethane foam in the electroless plating bath, it is treated with a sensitizing material and then a catalyzing material to render it receptive to electroless copper plating. Thus, the polyurethane substrate is immersed at room temperature in an aqueous sensitizing solution containing stannous chloride and hydrochloric acid, it is then thoroughly rinsed, immersed in an aqueous catalyzing solution containing palladium chloride and hydrochloric acid and again thoroughly rinsed, when it is ready for electroless copper deposition. Characteristically, the polyurethane substrate is immersed in the sensitizing bath and then the catalyzing bath for 2 to 10 minutes each at ambient temperature. Typically, the sensitizing bath contains 5 to 15 grams per litre of anhydrous stannous chloride and 0.005 to 0.015 gram per litre of hydrochloric acid. The catalyzing bath contains 0.2 to 1.0 gram per litre of palladium chloride and 0.005 to 0.015 gram per litre of hydrochloric acid.

The prepared substrate is then immersed in an electroless bath maintained at ambient temperature, viz., 15° to 30°C. The electroless plating bath consists of cupric sulphate pentahydrate, sodium potassium tartrate, formaldehyde and sodium hydroxide. This bath is suitably prepared by adding the aforementioned components to water and agitating the mixture to obtain thorough dissolution. Characteristically, the electroless plating bath contains 10 to 15 grams per litre of cupric sulphate pentahydrate, 50 to 55 grams per litre of sodium potassium tartrate, 8 to 13 grams per litre of sodium hydroxide and 18 to 23 grams per litre of formaldehyde.

The substrate, electrolessly plated as indicated above, is then electrolytically plated using a conventional copper electroplating bath, such as an acid-sulphate bath. The constituents of this bath are cupric sulphate pentahydrate and sulphuric acid. Hardening and brightening agents can be used to control the deposit and agitation is recommended. Consumable copper anodes are required to maintain the bath composition. A typical composition and operating conditions and their range are as follows:

| Constituent | Range | Nominal Value |
|---|---|---|
| Cupric sulphate pentahydrate (CuSO$_4$·5H$_2$O) (g/l) | 35—45 | 40 |
| Sulphuric acid H$_2$SO$_4$ (g/l) | 10—25 | 15 |
| Temperature: °C | 15—30 | 20 |
| Current density: amps/m$^2$ | 269—1075 | 806 |
| amps/ft$^2$ | 25—100 | 75 |
| Plating time: min | 30—60 | 45 |

Using the aforementioned electroless and acid sulphate baths, copper-metallized reticulated electrodes containing approximately 0.24 gram of copper per cc of foam substrate (1.5 g/in$^3$) were fabricated for use as cathodes in the metal removal apparatus of the invention. Characteristically, the Cu or other metal plating ranges from 0.1 to 0.3 gram/cc.

Six specific Examples are given below, in which these metallized organic polymer foam reticulated electrodes were employed as cathodes in the electrolytic cell device of Figure 1, to remove metal wastes

7

and to oxidize cyanide in dilute rinse waters, using various numbers and types of anodes. Where current and voltage ranges are given, the upper limits of these ranges were used to calculate current efficiency, current density and power consumption per unit weight of metal removed. In these Examples, all parts, percentages and ratios are by weight unless otherwise indicated. All metal concentrations were determined using standard atomic absorption techniques. Cyanide and cyanate concentrations (where applicable) were determined by titration methods known in the art.

## Example 1

Acid Copper Rinse Water Treatment

Using a reticulated electrode cell system for the removal of copper from a plating plant effluent rinse water steam, the metal cation, $Cu^{2+}$, was plated out on to the cathodes as a neutral metal. The conjugate anion, $SO_4^{2-}$, was left untreated during these tests. The anode electrochemical reaction was the evolution of oxygen with subsequent protonation of the rinse water.

The tests were conducted for a minimum of 200 hours on line. The flow rate of the rinse water through the system was 7.6 liters (2 US gallons) per minute, the apparatus being operated in the single pass mode, with the average metal cation inlet concentration of 160 ppm producing an average outlet metal cation concentration of 14 ppm.

The type of reticulated cathode employed was the copper-plated polyurethane foam electrode prepared, as described above, by electrolessly and then electrolytically plating Scott Industrial Foam (Q version) 6 mm ($\frac{1}{4}$ inch) thick with an average pore size of 0.85 mm (33 mils), more commonly referred to as the 12 pores/cm or 30 pores per linear inch (30 ppi) type. The area of plate of one side on the reticulated cathodes was 884 cm² (0.95 ft²) and 37 of such cathodes were used in the cell for the tests. Forty-one TIR—2000® dimensionally-stable electrodes were employed as the anodes. Similarly, the active area of the anodes on one side was 884 cm² (0.95 ft²). Characteristically, the TIR—2000 anodes consist a of 1.5 mm (0.060 inch) thick titanium expanded mesh substrate coated with the oxides of tantalum, iridium and titanium.

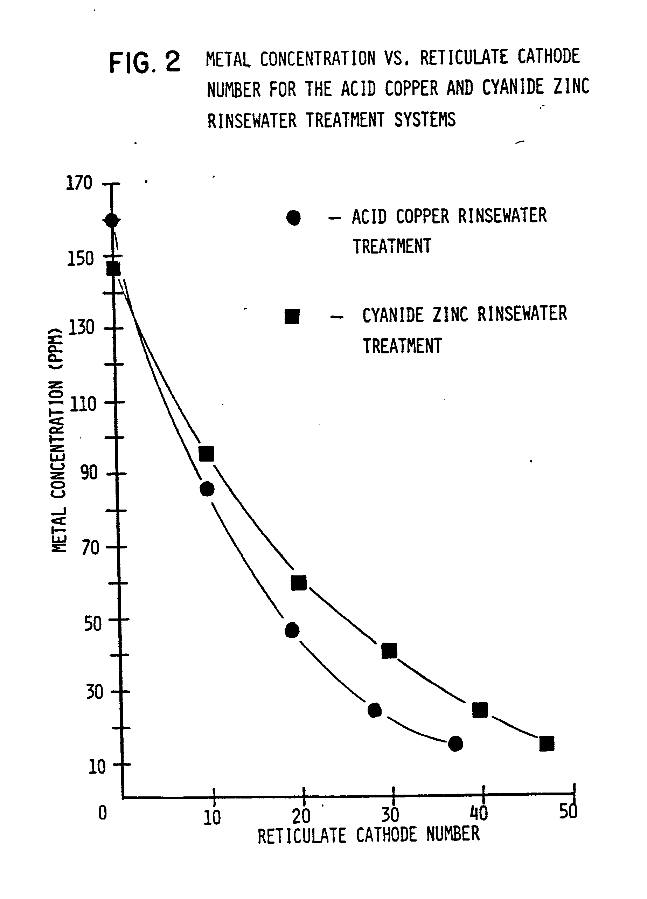

Using this particular apparatus, the cathode lifetime was 200 hours, producing an average uptake weight of 0.5 kg (1.10 lbs) of copper per cathode. The cell current for the apparatus ranged from 110 to 130 amps, producing a cathode current density range of 33.4 to 40.0 amps/m² (3.1 to 3.7 amps/ft²), namely 3.0 to 3.5 A/cathode, based on the area of plate of one side of a cathode. A resulting voltage range of 2.1 to 2.7 volts, a resulting DC power consumption not greater than 5.3 kilowatt-hrs/kg (2.4 kilowatt-hrs/lb) of metal removed and a resulting current efficiency of 43 percent were given. The average pH of the waste water flowing into the cell was 3.2 and the average pH of the water coming out of the cell was 2.1. Figure 2 illustrates the metal concentration for the copper removal system as a function of the number of cathodes at the above operating conditions. The average metal removal efficiency of the system was 91 percent.

## Example 2

Cyanide Zinc Rinse Water Treatment

Using the electrode cell system for the removal of zinc from a plating plant effluent rinse water stream, the metal cation, $Zn^{2+}$, was plated out on to the cathode as a neutral metal. The conjugate anion, $CN^-$, was left untreated during these tests. The anode electrochemical reaction was the evolution of oxygen with subsequent protonation of the rinse water. The tests were conducted for a minimum of 100 hours on line. The flow rate of the rinse water through the system was 7.6 litre (2 US gallons) per minute, the system being operated in the single pass mode, with the average metal cation inlet concentration of 147 ppm producing an average outlet metal cation concentration of 15 ppm. The type of cathode employed was the copper-plated polyurethane electrode of Example 1, 8 mm ($\frac{1}{4}$ inch) thick, with an average pore size of 0.85 mm (33 mils), more commonly referred to as the 12 pores/cm or 30 pores per linear inch (30 ppi) type. The area of plate of one side on the cathodes was 1300 cm² (1.40 ft²) and 46 cathodes were used in the cell for the tests. Fifty-one graphite electrodes were employed as the anodes. Similarly, the active area of the anodes on one side was 1300 cm² (1.40 ft²). Characteristically, the graphite electrodes were cut from an extruded block of graphite and fabricated into plates in which holes were drilled to allow solution to flow through them.

For this particular system, the cathode life-time was 100 hours, producing an average uptake weight of 0.3 kg (0.66 lbs) of zinc per cathode. The cell current for the system ranged from 550 to 600 amps producing a cathode current density range of 91.0 to 100 amps/m² (8.5 to 9.3 amps/ft²), namely 12 to 13 A/cathode, based on the area of plate of one side of a cathode. A resulting voltage range of 4.0 to 5.5 volts, a resulting DC power consumption not greater than 55 kilowatt hrs/kg (25 kilowatt-hrs/lb) of metal removed, and a resulting cathode plating efficiency of 8.2 percent were given. The average pH of the water fed into the cell was 12.5 and the average pH of the effluent from the cell was 12.2. Figure 2 illustrates the metal concentration for the zinc removal system as a function of cathode number at the above operating conditions. The average metal removal efficiency of the system was 90 percent.

## Example 3

Cadmium Cyanide Rinse Water Treatment

Using the electrode cell system for the concurrent removal of cadmium and the oxidation of cyanide to cyanate in a simulated rinse solution, the metal cation, $Cd^{2+}$, was plated out on to the cathode, as a neutral metal and the conjugate anion, $CN^-$, was oxidized to cyanate, $CNO^-$, at the anode.

The tests were conducted as batch operations on the laboratory scale for 200 minutes with a batch size of 15 litres (4 US gallons). The flow rate of the simulated rinse solution was 3.75 litres (one gallon) per minute, the system being operated in the recirculating mode with 50 passes of the system reservoir, volume 15 litres (4 gal). The initial $Cd^{2+}$ concentration was 141 ppm and the final $Cd^{2+}$ concentration was 0.02 ppm. The initial $CN^-$ concentration was 270 ppm and the final $CN^-$ concentration was 8 ppm with a $CNO^-$ concentration of 395 ppm. The pH was initially set at 12.0 by NaOH addition to the reservoir and it decreased to 11.8 at the end of the run.

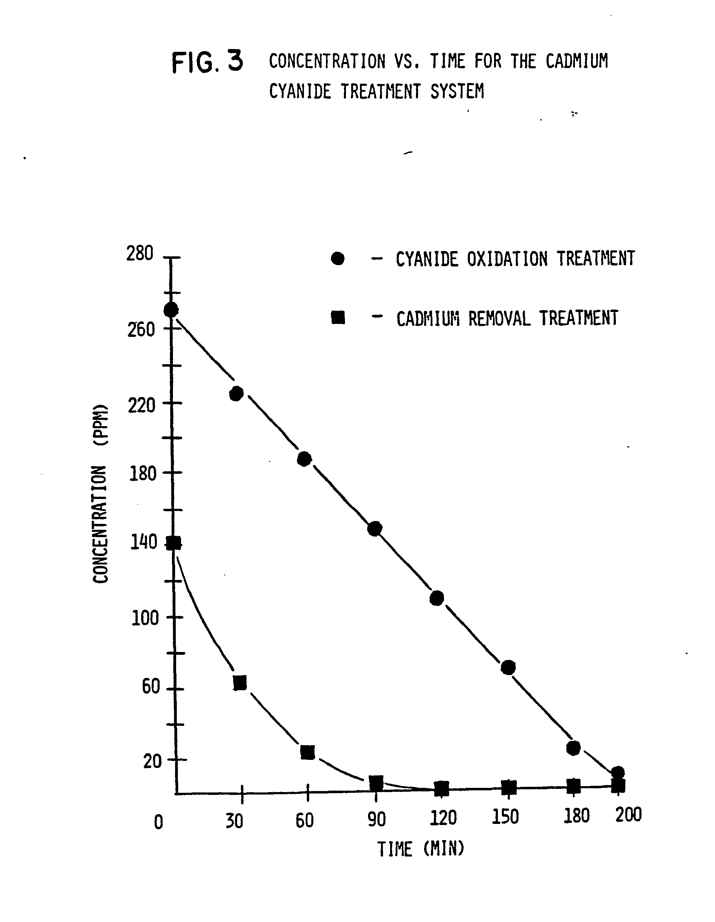

The type of cathode employed was the copper-plated polyurethane electrode of Example 1, 8 mm ($\frac{1}{4}$ inch) thick with an average pore size of 0.85 mm (33 mils). The area of plate on one side of the cathodes was 149 $cm^2$ (0.16 $ft^2$) and 3 cathodes were used in the cell for these tests. Four 12-pore/cm (30 ppi) nickel-plated polyurethane electrodes, prepared as described above by electrolessly and then electrolytically plating Scott Industrial Foam (Q version) 8 mm ($\frac{1}{4}$ inch) thick, with a facial area of 149 $cm^2$ (0.16 $ft^2$) each, were used as the anodes. The cell current for the system was 3 amps producing a cathode current density of 66 amps/$m^2$ (6.1 amps/$ft^2$), namely 1.0 amp/cathode, based on the facial area of one side of an electrode. This cell current produced a cell voltage of 2.4 volts. Additionally, the cathode plating current efficiency was 10 percent, the anode cyanide oxidizing current efficiency was 81 percent and the DC power consumption of the cell was 0.022 kilowatt-hrs/litre (0.006 kilowatt-hrs/gal) of batch. Figure 3 illustrates the $Cd^{2+}$ and $CN^-$ concentrations as a function of time for the runs. The cadmium metal removal efficiency was +99 percent and the cyanide oxidation efficiency was +95 percent.

## Example 4

Watts Nickel Rinse Water Treatment

Using the electrode cell system for the removal of nickel from a simulated rinse solution, the metal cation, $Ni^{2+}$, was electrochemically plated out on to the cathode, as a neutral metal, and the conjugate anions, $Cl^-$ and $SO_4^{2-}$, were left untreated during these tests. The anode electro-chemical reaction was the evolution of oxygen with subsequent protonation of the rinse solution.

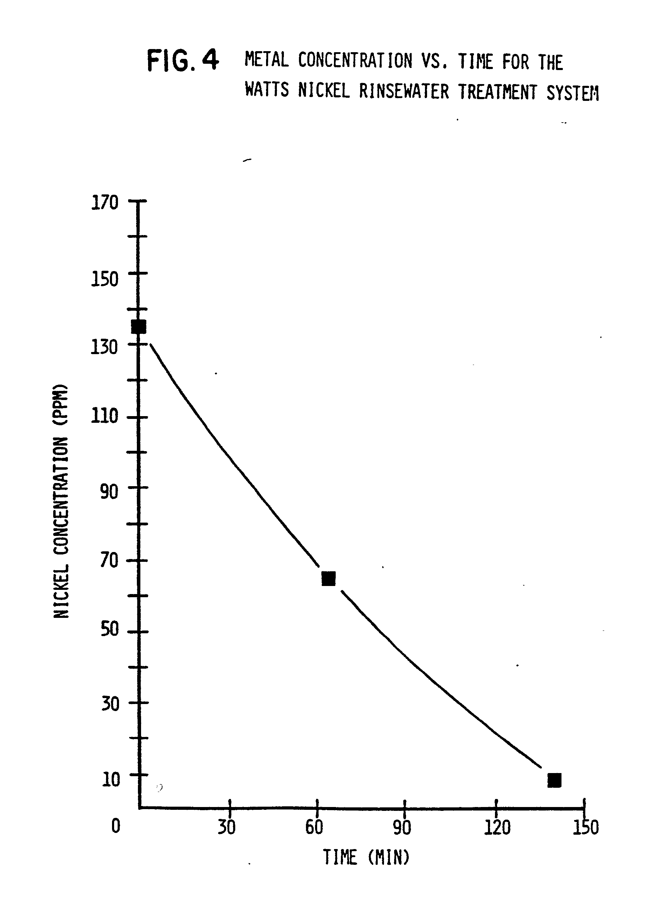

The tests were conducted as batch operations on the laboratory scale for 150 minutes with a batch size of 15 litres (4 US gallons). The flow rate of the simulated rinse solution was 3.75 litres (one gallon) per minute, the system being operated in the recirculating mode with 37 passes through the system reservoir, volume 15 litres (4 US gal). The initial concentration was 135 ppm and the final concentration was 8 ppm. The pH of the system was held in the range from 4 to 7 by use of a pH controller. To improve the conductivity of the rinse solution, ammonium sulphate, $(NH_4)_2SO_4$, was added to the reservoir at a concentration of 5 grams/litre. The type of cathode employed was the copper-plated polyurethane electrode described in Example 1, 8 mm ($\frac{1}{4}$ inch) thick with an average pore size of 0.85 mm (33 mils or 30 ppi foam). The area of plate of one side of the cathode was 149 $cm^2$ (0.16 $ft^2$) and 3 cathodes were used in the cell for these tests. Four dimensionally stable TIR—2000 electrodes (as in Example 3) were employed as the anodes. The active facial area of the anodes was 149 $cm^2$ (0.16 $ft^2$) based on one side of the anode (298 $cm^2$ or 0.32 $ft^2$/anode). The cell current was 4.8 amps producing a cathode current density of 107.5 amps/$m^2$ (10 amps/$ft^2$), namely 1.6 amps/cathode, based on the facial area of plate on one side of a cathode. This produced a cell voltage of 4.0 volts. Additionally, the cathode plating current efficiency was 14 percent and the DC power consumption of the cell per unit weight of metal removed was 24.2 kilowatt-hrs/kg (11 kilowatt-hrs/lb) of nickel. Figure 4 illustrates the nickel concentration as a function of time for the runs. The nickel metal removal efficiency was 94 percent.

## Example 5

Ammoniacal Copper Etchant Rinse Water Treatment

Using the electrode cell system for the removal of copper from a simulated rinse solution, the metal cation, $Cu^{2+}$, was electrochemically plated out on to the cathode, as a neutral metal, and the conjugate anion, $Cl^-$, was left untreated during these tests. The anode electrochemical reaction was the evolution of oxygen with subsequent protonation of the rinse solution.

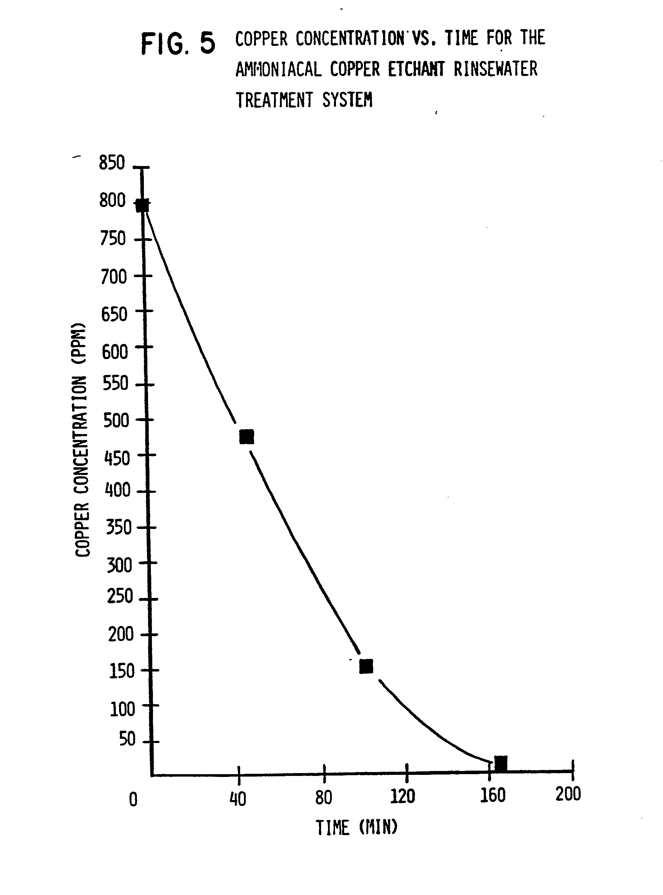

The tests were conducted as batch operations on the laboratory scale for 165 minutes with a batch size of 12 litres (3.2 US gallons). The flow rate of the simulated rinse was 1.88 litres ($\frac{1}{2}$ US gallon) per minute, the system being operated in the recirculating mode with 28 passes through the system reservoir, volume 12 litres (3.2 gal). The initial concentration was 790 ppm and the final concentration was 12 ppm. The pH of the system was initially 10.0, dropping to a final pH of 9.5. The type of cathode employed was the copper-plated polyurethane electrode of Example 1, 8 mm ($\frac{1}{4}$ inch) thick with an average pore size of 0.85 mm (33 mils or 30 ppi foam). The area of plate of one side of the cathode was 149 $cm^2$ (0.16 $ft^2$) and 3 cathodes were used in the cell for these tests. Four TIR—2000 electrodes (as in Example 3) were employed as the anodes. The active facial area of the anodes was 149 $cm^2$ (0.16 $ft^2$) based on one side of the anode (298 $cm^2$ or 0.32 $ft^2$/anode). The cell current was 4.8 amps producing a cathode current density of 107.5 amps/$m^2$ (10 amps/$ft^2$), namely 1.6 amps/cathode, based on the facial area of plate on one side of a cathode. This produced a cell voltage of 3.6 volts. Additionally, the cathode plating current efficiency was 60 percent and the DC power consumption of the cell per unit weight of metal removed was 5.06 kilowatt-hrs/kg (2.3 kilowatt-hrs/lb) of copper. Figure 5 illustrates the copper concentration as a function of time for the runs. The copper metal removal efficiency was 98 percent.

## Example 6

Electroless Copper Rinse Water Treatment

Using the electrode cell system for the removal of copper from a simulated rinse solution, the metal cation, $Cu^{2+}$, was electrochemically plated out on to the cathode, as a neutral metal, with the conjugate anions and chelating agents being left untreated during these tests. The anode electrochemical reaction was the evolution of oxygen with subsequent protonation of the rinse solution.

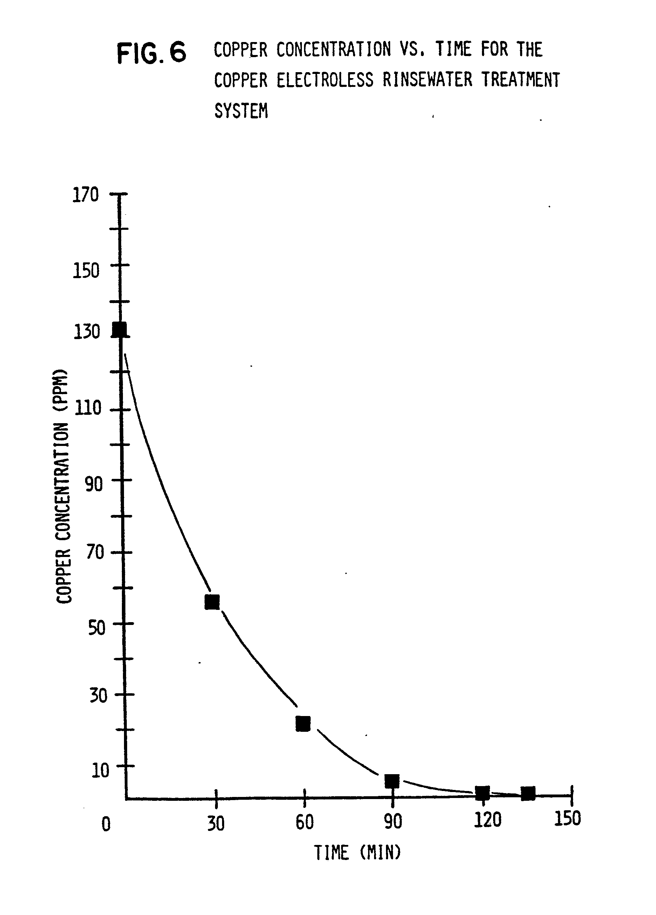

The tests were conducted as batch operations on the laboratory scale for 135 minutes with a batch size of 15 litres (4 US gallons). The flow rate of the simulated rinse was 3.75 litres (one gallon) per minute, the system being operated in the recirculating mode with 37 passes through the system reservoir, volume 15 litres (4 gal). The initial concentration was 132 ppm and the final concentration was 1.2 ppm. The pH of the system was initially 5.3, dropping to the final pH of 3.6. The type of cathode employed was the copper-plated polyurethane electrode of Example 1, 8 mm ($\frac{1}{4}$ inch) thick with an average pore size of 0.85 mm (33 mils or 30 ppi foam). The area of plate of one side of the cathodes was 149 $cm^2$ (0.16 $ft^2$) and 3 cathodes were used in the cell for these tests. Four TIR—2000 electrodes (as in Example 3) were employed as the anodes. The active facial area of the anodes was 149 $cm^2$ (0.16 $ft^2$) based on one side of the anode (298 $cm^2$ or 0.32 $ft^2$/anode). The cell current was 3 amps, producing a cathode current density of 68 amps/$m^2$ (6.3 amps/$ft^2$), namely 1 amp/cathode, based on the facial area of plate on one side of a cathode. This produced a cell voltage of 3.8 volts. Additionally, the cathode plating current efficiency was 22 percent and the DC power consumption of the cell per unit weight of metal removed was 13.64 kilowatt-hrs/kg (6.2 kilowatt-hrs/lb) of copper. Figure 6 illustrates the copper concentration as a function of time for the runs. The copper removal efficiency was 99 percent.

## Claims

1. An apparatus for reducing the amount of one or more metal contaminants in waste water by subjecting it to electrolytic action comprising a membrane-free and diaphragm-free electrolytic cell having a plurality of anodes and a plurality of cathodes mounted in a mutually-spaced arrangement in a nonconductive cell box, the box having a waste water inlet and a water outlet for passing waste water through the electrodes, the anodes and the cathodes being connected to respective anode and cathode bus bars for connection to a source of electrical energy, characterized in that the nonconductive cell box comprises an upper peripheral flange, the anodes and cathodes being movable on the flange and each having a terminal connector to the respective bus bar located on the cell box below the flange, each anode having openings through which the waste water can flow and each cathode comprising a reticulated structure having a metallised open-cell organic polymer foam as a substrate.

2. An apparatus according to claim 1, wherein at least one of the reticulated cathodes comprises an open-cell organic polymer foam substrate having an electroless and then an electrolytic deposit of metal or alloy on and within the pores of the foam.

3. An apparatus according to claim 2, wherein the cathode substrate comprises polyurethane foam.

4. An apparatus according to claim 2 or 3, wherein the metal deposit is copper.

5. An apparatus according to claim 2 or 3, wherein the metal deposit is nickel.

6. An apparatus according to any preceding claim, wherein at least one of the anodes is a dimensionally-stable anode.

7. An apparatus according to claim 6, wherein the or each dimensionally-stable anode has a titanium substrate.

8. An apparatus according to any preceding claim, wherein at least one of the anodes comprises lead.

9. An apparatus according to any preceding claim, wherein at least one of the anodes comprises graphite.

10. An apparatus according to any of claims 1 to 5, wherein at least one of the anodes comprises an open-cell organic polymer foam substrate having an electroless and then an electrolytic deposit of metal or alloy on and within the pores of the foam.

11. An apparatus according to any preceding claim, wherein each anode and each cathode has a conductive contact bar with an extension in contact with its upper portion, each contact bar extension resting on the cell box flange.

12. An apparatus according to any preceding claim, wherein the anodes and the cathodes are spaced by means of a plurality of individual nonconductive spacers.

13. An apparatus according to any preceding claim, wherein the anodes or the cathodes extend over less than the total cross-sectional area of the cell box or containing one or more holes therein preventing cell overflow.

14. Use of the apparatus according to claim 1 for reducing the amount of one or more contaminants in waste water.

15. Use according to claim 14 wherein the waste water contains a metal contaminant and cyanide.

## Patentansprüche

1. Eine Vorrichtung zur Reduzierung der Menge von einer oder mehreren Metall-Verunreinigungen in Abwasser, das einer elektrolytischen Einwirkung unterworfen wird, welche eine membranfreie und diaphragmafreie elektrolytische Zelle mit einer Vielzahl von Anoden und einer Vielzahl von Kathoden aufweist, die in einem Abstand voneinander in einem nicht-leitenden Zellengefäß angeordnet sind, wobei das Gefäß einen Abwasserzufluß und einen Wasserabfluß für den Durchlauf des Abwassers durch die Elektroden aufweist und die Anoden und die Kathoden mit entsprechenden Anoden- und Kathoden-Sammelschienen für den Anschluß an eine elektrische Energiequelle verbunden sind, dadurch gekennzeichnet, daß das nicht leitende Zellengefäß einen oberen, an der Außenseite umlaufenden, verstehenden Rand aufweist, wobei die Anoden und Kathoden auf dem vorstehenden Rand bewegbar sind und jede eine Anschlußklemme für die entsprechende Sammelschiene besitzt, die am Zellengefäß unterhalb des vorstehenden Randes angeordnet ist, wobei jede Anode Öffnungen hat, durch die das Abwasser fließen kann, und jede Kathode eine netzförmige Struktur mit einem metallisierten, offenzelligen, organischen Polymerschaumstoff als Substrat aufweist.

2. Eine Vorrichtung gemäß Anspruch 1, in der mindestens eine der netzförmigen Kathoden ein offenzelliges, organisches Polymerschaumstoff-Substrat mit einer stromlos und anschließend elektrolytisch erfolgten Abscheidung von Metall oder von einer Legierung auf und innerhalb der Poren des Schaumstoffs aufweist.

3. Eine Vorrichtung gemäß Anspruch 2, in der das Kathoden-Substrat Polyurethanschaumstoff aufweist.

4. Eine Vorrichtung gemäß Anspruch 2 oder 3, in der die Metallabscheidung Kupfer ist.

5. Eine Vorrichtung gemäß Anspruch 2 oder 3, in der die Metallabscheidung Nickel ist.

6. Eine Vorrichtung gemäß einem vorhergehenden Anspruch, in der mindestens eine der Anoden eine dimensions-stabile Anode ist.

7. Eine Vorrichtung gemäß Anspruch 6, in der die oder jede dimensionsstabile Anode ein Titan-Substrat besitzt.

8. Eine Vorrichtung gemäß einem vorgehenden Anspruch, in der mindestens eine der Anoden Blei enthält.

9. Eine Vorrichtung gemäß einem vorhergehenden Anspruch, in der mindestens eine der Anoden Graphit enthält.

10. Eine Vorrichtung gemäß einem der Ansprüche 1 bis 5, in der mindestens eine der Anoden ein offenzelliges, organisches Polymerschaumstoff-Substrat mit einer stromlos und anschließend elektrolytisch erfolgten Abscheidung von Metall oder einer Legierung auf und innerhalb der Poren des Schaumstoffs aufweist.

11. Eine Vorrichtung gemäß einem vorhergehenden Anspruch, in der jede Anode und jede Kathode einen leitenden Kontaktstab mit einer Verlängerung in Kontakt mit ihrem oberen Abschnitt aufweist, wobei die Verlängerung jedes Kontaktstabes auf dem vorstehenden Rand des Zellengefäßes ruht.

12. Eine Vorrichtung gemäß einem vorhergehenden Anspruch, in der die Anoden und die Kathoden mittels einer Vielzahl von einzelnen nicht-leitenden Abstandshaltern im Abstand voneinander angeordnet sind.

13. Eine Vorrichtung gemäß einem vorhergehenden Anspruch, in der die Anoden oder die Kathoden sich über eine geringere Breite als die gesamte Querschnittsfläche des Zellengefäßes erstrecken oder ein oder mehrere Löcher enthalten, die ein Überlaufen einer Zelle verhindern.

14. Verwendung der Vorrichtung gemäß Anspruch 1 für die Reduzierung der Menge von einer oder von mehreren Verunreinigungen im Abwasser.

15. Verwendung gemäß Anspruch 14, bei der das Abwasser eine Metall-Verunreinigung und Cyanid enthält.

## Revendications

1. Appareil qui, destiné à réduire la quantité d'un ou plusieurs agents polluants métalliques présents dans des eaux usées en soumettant celles-ci à une action électrolytique, comprend une cellule d'électrolyse, sans membrane ni diaphragme, qui comporte plusieurs anodes et plusieurs cathodes montées de façon espacée les unes par rapport aux autres dans un bac de cellule non conducteur, lequel comporte une entrée d'eaux usées et une sortie d'eau pour laisser passer des eaux usées à travers les électrodes, les anodes et les cathodes étant reliées à des barres collectrices anodiques et cathodiques respectives en vue de leur connexion à une source d'énergie électrique, caractérisé en ce que le bac de cellule non conducteur comporte une bride périphérique supérieure et en ce que les anodes et les cathodes sont déplaçables sur la bride et présentent chacune une cosse qui les relie à la barre collectrice correspondante disposée sur le bac de cellule sous la bride, chaque anode présentant des orifices par lesquels les eaux usées peuvent s'écouler et chaque cathode présentant une structure réticulaire ayant pour support une mousse de polymère organique à alvéoles ouverts métallisée.

2. Appareil selon la revendication 1, caractérisé en ce qu'au moins l'une des cathodes réticulaires comprend un support formé de mousse de polymère organique à alvéoles ouverts et présentant un revêtement de métal ou d'alliage déposé, par voie non électrolytique et ensuite électrolytiquement, sur la mousse et dans les pores de celle-ci.

3. Appareil selon la revendication 2, caractérisé en ce que le support cathodique se compose de mousse de polyuréthane.

4. Appareil selon la revendication 2 ou 3, caractérisé en ce que le métal déposé est du cuivre.

5. Appareil selon la revendication 2 ou 3, caractérisé en ce que le métal déposé est du nickel.

6. Appareil selon l'une quelconque des revendications précédentes, caractérisé en ce qu'au moins l'une des anodes est une anode dimensionnellement stable.

7. Appareil selon la revendication 6, caractérisé en ce que l'anode ou chaque anode dimensionnellement stable comporte un support de titane.

8. Appareil selon l'une quelconque des revendications précédentes, caractérisé en ce qu'au moins l'une des anodes se compose de plomb.

9. Appareil selon l'une quelconque des revendications précédentes, caractérisé en ce qu'au moins l'une des anodes se compose de graphite.

10. Appareil selon l'une quelconque des revendications 1 à 5, caractérisé en ce qu'au moins l'une des anodes comporte un support en mousse de polymère organique à alvéoles ouverts présentant un revêtement de métal ou d'alliage déposé, par voie non électrolytique et ensuite électrolytiquement, sur la mousse et à l'intérieur des pores de celle-ci.

11. Appareil selon l'une quelconque des revendications précédentes, caractérisé en ce que chaque anode et chaque cathode comporte une barre de contact conductrice présentant un prolongement et placée au contact de sa partie supérieure, chaque prolongement de barre de contact prenant appui sur la bride du bac de cellule.

12. Appareil selon l'une quelconque des revendications précédentes, caractérisé en ce que les anodes et les cathodes sont espacées au moyen d'un certain nombre de pièces d'espacement non conductrices individuelles.

13. Appareil selon l'une quelconque des revendications précédentes, caractérisé en ce que les anodes ou les cathodes s'étendent sur moins que la section totale du bac de cellule ou en ce qu'un ou plusieurs trous y sont ménagés pour éviter un débordement de la cellule.

14. Utilisation de l'appareil selon la revendication 1 pour réduire la quantité d'un ou plusieurs agents polluants présents dans des eaux usées.

15. Utilisation selon la revendication 14, caractérisée en ce que les eaux usées contiennent un agent poluant métallique et du cyanure.

FIG. I

0 071 443

**FIG. 2** METAL CONCENTRATION VS. RETICULATE CATHODE NUMBER FOR THE ACID COPPER AND CYANIDE ZINC RINSEWATER TREATMENT SYSTEMS

● — ACID COPPER RINSEWATER TREATMENT

■ — CYANIDE ZINC RINSEWATER TREATMENT

FIG. 3  CONCENTRATION VS. TIME FOR THE CADMIUM
CYANIDE TREATMENT SYSTEM

FIG. 4  METAL CONCENTRATION VS. TIME FOR THE
WATTS NICKEL RINSEWATER TREATMENT SYSTEM

FIG. 5  COPPER CONCENTRATION VS. TIME FOR THE
AMMONIACAL COPPER ETCHANT RINSEWATER
TREATMENT SYSTEM

**FIG. 6** COPPER CONCENTRATION VS. TIME FOR THE COPPER ELECTROLESS RINSEWATER TREATMENT SYSTEM

*Fig. 7*

*Fig. 8*

_Fig. 9a_

_Fig. 9b_

_Fig. 9c_

_Fig 10_

_Fig. 11_

_Fig. 12_

_Fig. 13_

_Fig. 14_